# EUROPÄISCHE PATENTSCHRIFT

(11) **EP 2 742 793 B1**
(45) Veröffentlichungstag und Bekanntmachung des Hinweises auf die Patenterteilung: **12.02.2020**
(21) Anmeldenummer: 13184943.2
(22) Anmeldetag: 18.09.2013
(51) Int. Cl.: A01D 82/02, A01D 43/10

(54) **Nachzerkleinerungsvorrichtung**
Fine crushing device
Dispositif de broyage secondaire

(30) Priorität: 14.12.2012 DE 102012112265
(43) Veröffentlichungstag der Anmeldung: 18.06.2014
(73) Patentinhaber: CLAAS Saulgau GmbH, 88348 Bad Saulgau (DE)
(72) Erfinder: Bönig Dr., Ingo, 33330 Gütersloh (DE); Laumeier, Ludger, 33397 Rietberg (DE)

(56) Entgegenhaltungen:
- EP-A1- 0 856 246
- EP-A1- 1 101 397
- DE-B3-102011 084 443
- DE-U1-202009 000 431

## Beschreibung

Die Erfindung betrifft eine Nachzerkleinerungsvorrichtung für gehäckseltes Erntegut gemäß dem Oberbegriff des Anspruchs 1.

Landwirtschaftliche Erntemaschinen wie selbstfahrende Feldhäcksler sind bei Einsatz in der Maisernte regelmäßig mit einer Nachzerkleinerungsvorrichtung, auch Konditioniervorrichtung oder Corn-Cracker genannt, ausgestattet. Eine solche Nachzerkleinerungsvorrichtung dient dazu, das zuvor von einem oder mehreren Bearbeitungsaggregaten, wie insbesondere einem Häckselaggregat, zerkleinerte Erntegut nochmals gezielt weiter zu zerkleinern. Nachzerkleinerungsvorrichtungen in der Maisernte dienen vor allem dem Zweck, das Erntegut für den Einsatz als Viehfutter oder zur Biogaserzeugung aufzubereiten.

Aus dem Stand der Technik bekannte Nachzerkleinerungsvorrichtungen umfassen dazu üblicherweise zwei parallel zueinander angeordnete, gegeneinander vorgespannte, gegenläufig angetriebene Walzen, zwischen denen das bereits gehäckselte Erntegut hindurchgeführt wird, um im Häckselgut enthaltene (Mais-) Körner anzuschlagen, wodurch sich die Verdaulichkeit des späteren Futters für Tiere bzw. die Verwendbarkeit des Ernteguts für die Biogaserzeugung verbessert.

Ganz allgemein bestehen verschiedene Anforderungen an Nachzerkleinerungsvorrichtungen. Zunächst soll eine gute Bearbeitungsqualität gewährleistet sein. Das heißt, dass insbesondere ein sicheres Aufschließen von möglichst allen im Erntegut enthaltenen Maiskörnern erreicht werden soll. Andererseits soll das Erntegut aber nicht zu einer breiartigen Masse gequetscht werden, sondern weiterhin eine grobe Struktur haben und gut verdichtbar sein. Darüber hinaus soll möglichst vermieden werden, dass einzelne Pflanzenbestandteile wie Lieschblätter den Nachzerkleinerer ungekürzt passieren.

Aufgrund der hohen, stets steigenden Durchsatzleistungen von Feldhäckslern müssen auch die darin verwendeten Nachzerkleinerungsvorrichtungen zunehmend hohe Durchsätze erreichen. Nicht zuletzt spielen daher die erzielbare Durchsatzleistung und die dazu erforderliche Antriebsleistung eine große Rolle; und es besteht aus Energieeffizienzgründen ein Bedarf, letztere möglichst gering zu halten.

Aus der DE 26 21 292 A1 ist eine Nachzerkleinerungsvorrichtung bekannt, deren Walzen in axialer Richtung abwechselnd mit Abschnitten großen und kleinen Durchmessers versehen sind, die ineinander eintreten. Die großen Abschnitte sind als Zahnscheiben gefertigt, so dass zwischen den Zahnscheiben gegenüberliegender Walzen jeweils eine Überdeckung entsteht und die Zahnscheiben einander als Gegenschneide zum kraft- und damit energiesparenden Schneiden des Erntegutes dienen. Die DE 26 21 292 A1 verweist in diesem Zusammenhang auf das Gebiet von Kunststoffzerkleinerern.

Aus der DE 25 26 650 A1 ist ein Zerkleinerungsaggregat zum Überführen von Kunststoff- oder sonstigen Industrieabfällen in rieselfähiges Granulat bekannt, bei dem die Walzen mit kammartig ineinandergreifenden Abschnitten großen und kleinen Durchmessers versehen sind. Durch das Ineinandergreifen der Abschnitte findet, wie in der DE 26 21 292 A1, ein Schneiden statt. Darüber hinaus tragen bei dem Zerkleinerungsaggregat der DE 25 26 650 A1 sämtliche einander gegenüberliegenden Umfangsflächen der Walzen jeweils ein Zahnprofil und bilden einen Zerkleinerungsspalt zueinander. Damit findet bei diesem Aggregat eine Gutzerkleinerung nicht nur an den Scherkanten, sondern auch an den mit Zähnen versehenen gegenüberliegenden Umfangsflächen der Walzen statt.

Die Nachzerkleinerungsvorrichtung gemäß DE 197 03 486 A1 macht sich eben dieses Prinzip zunutze. Hier sind die Walzen beider Ausführungsbeispiele ausschließlich mit zueinander parallelen Umfangsflächen versehen, wobei sich gegenüberliegende Umfangsflächen jeweils ein Zahnprofil besitzen und zueinander einen Zerkleinerungsspalt bilden, um im Erntegut enthaltene Körner sicher aufzuschließen. Durch die kammartig ineinander greifenden Abschnitte großen und kleinen Durchmessers findet daneben an den gebildeten Scherkanten ein Schneiden des Ernteguts statt, so dass auch lange, jedoch dünne Bestandteile des Ernteguts wie beispielsweise Lieschblätter zerkleinert werden.

In der Praxis zeigt sich, dass die zuerst genannte Vorrichtung die im Erntegut enthaltenen Körner nicht sicher aufschließt. Die zuletzt genannten Vorrichtungen weisen dagegen einen deutlich erhöhten Leistungsbedarf auf.

Alternativ zur Walzenbauart der oben beschriebenen Zerkleinerungsvorrichtungen sind aus dem Stand der Technik Vorrichtungen in Keilscheibenbauform bekannt. Lediglich beispielhaft sei hierzu auf die EP 1 101 397 A1 verwiesen. Nachteilig an dieser Bauform ist, dass aufgrund des gewollten tiefen Ineinandergreifens der Keilscheiben der Achsabstand zwischen den Walzen kleiner als herkömmlich ist, so dass diese Bauart zumindest ein anderes Gehäuse benötigt.
Die Merkmale des Oberbegriffs sind aus DE 20 2009 000 431 U1 bekannt.
Vor diesem Hintergrund ist es Aufgabe der vorliegenden Erfindung, eine Nachzerkleinerungsvorrichtung anzugeben, die unter Erzielung einer erhöhten Aufbereitungsqualität des Ernteguts auch bei hohem Durchsatz einen verhältnismäßig geringen Antriebsenergiebedarf aufweist. Dabei soll die Nachzerkleinerungsvorrichtung Grundabmessungen, insbesondere den Walzenachsabstand, herkömmlicher Vorrichtungen in Walzenbauweise aufweisen.

Die Aufgabe wird gelöst durch eine Nachzerkleinerungsvorrichtung mit den Merkmalen des Anspruchs 1. Diese zeichnet sich dadurch aus, dass jede der Walzen in axialer Richtung abwechselnd gerade Abschnitte mit einer zur Rotationsachse der Walze parallel verlaufenden Umfangsfläche und schräge Abschnitte mit einer zur Rotationsachse der Walze schräg verlaufenden Umfangsfläche aufweist, wobei einem geraden Abschnitt der einen Walze jeweils ein gerader Abschnitt der anderen Walze zugeordnet ist, derart dass deren sich gegenüberliegenden Umfangsflächen zueinander einen parallel zur Rotationsachse verlaufenden Zerkleinerungsspalt für das Erntegut bilden, und wobei einem schrägen Abschnitt der einen Walze jeweils ein schräger Abschnitt der anderen Walze zugeordnet ist, derart dass deren sich gegenüberliegenden Umfangsflächen zueinander einen schräg zur Rotationsachse verlaufenden Zerkleinerungsspalt für das Erntegut bilden, wobei an jeden geraden Abschnitt einer Walze eine sich in radialer Ebene erstreckende Stirnfläche angrenzt, und wobei einer so gebildeten Stirnfläche der einen Walze jeweils eine Stirnfläche der anderen Walze zugeordnet ist, um mit dieser einen in radialer Ebene verlaufenden Scherspalt für das Erntegut zu bilden.

Erfindungsgemäß ist durch diese Anordnung gewährleistet, dass die Nachzerkleinerungsvorrichtung einerseits Bereiche, in denen das Erntegut an einem zur Rotationsachse parallelen Spalt zerkleinert wird, und anderseits Bereiche aufweist, in denen es an einem schräg zur Rotationsachse verlaufenden Spalt zerkleinert wird. Durch den somit partiell schrägen Verlauf der Zerkleinerungsspalte weist die Vorrichtung bei gleicher axialer Baubreite einen effektiv längeren Gesamtspaltverlauf und auch eine vergrößerte wirksame Walzenoberfläche auf, wodurch sich eine erhöhte Zerkleinerungswirkung ergibt. Da sich die schrägen Abschnitte in axialer Richtung stets mit geraden Abschnitten abwechseln, ist gewährleistet, dass die Walzen trotz vorhandener schräger Zerkleinerungsflächen nicht so tief ineinander eingreifen müssen wie bei einer reinen Keilscheibenbauform. Die Achsabstände von Nachzerkleinerungsvorrichtungen herkömmlicher Walzenbauform können somit beibehalten werden. Dieses bringt den Vorteil mit sich, dass ein die Walzen der erfindungsgemäßen Vorrichtung aufnehmendes Gehäuse gemäß dem Baukastenprinzip auch geeignet sein kann, herkömmliche Konditionierwalzen mit ausschließlich zur Rotationsachse parallelen Umfangsflächen aufzunehmen.

Gemäß der Erfindung grenzt an jeden geraden Abschnitt einer Walze eine sich in radialer Ebene - d.h. senkrecht zur Rotationsachse - erstreckende Stirnfläche an, wobei einer so gebildeten Stirnfläche der einen Walze jeweils eine Stirnfläche der anderen Walze zugeordnet ist, um mit dieser einen in radialer Ebene verlaufenden Scherspalt für das Erntegut zu bilden. Durch diese Maßnahme wird somit erreicht, dass neben den zur Rotationsachse parallelen und schrägen Zerkleinerungsspalten weiterhin in radialer Ebene verlaufende Scherspalte zur Zerkleinerung des Ernteguts dienen. Da jedem geraden Abschnitt einer Walze genau eine einen Scherspalt bildende Stirnfläche zugeordnet ist, wird so in regelmäßigen Abständen (über die axiale Breite der Walzen) ein zuverlässiges und energiesparendes Schneiden von im Erntegut enthaltenen längeren Pflanzenbestandteilen wie beispielsweise Lieschblättern gewährleistet. Der Anteil von Überlängen im Erntegut wird so sicher reduziert.

Bei einer zweckmäßigen Weiterbildung der Vorrichtung sind einander zugeordnete schräge Abschnitte komplementär zueinander ausgebildet. Das heißt, dass deren Umfangsflächen am gebildeten Spaltabschnitt zwar schräg zur Rotationsachse, jedoch parallel zueinander verlaufen und sich somit bildlich ergänzen.

Vorteilhaft umfassen die schrägen Abschnitte jeder Walze erste schräge Abschnitte und zweite schräge Abschnitte, die sich zumindest darin unterscheiden, dass deren Umfangsflächen bezogen auf eine Richtung der Rotationsachse zueinander entgegengesetzte Schrägungen aufweisen. Die entgegengesetzten Schrägungen der ersten und zweiten Abschnitte einer Walze bewirken dabei, dass bei der Zerkleinerung des Ernteguts aufgrund der schrägen Umfangsfläche auftretende Axialkräfte reduziert werden.

Besonders vorteilhaft ist dabei eine Ausgestaltung, wonach sich auf jeder der Walzen erste schräge Abschnitte und zweite schräge Abschnitte in axialer Richtung abwechseln. In diesem Fall heben sich die axialen Belastungen an jeder der Walzen in sich auf, wodurch in axialer Richtung praktisch keine Lagerkräfte aufzunehmen sind.

Die schrägen Abschnitte können grundsätzlich auf unterschiedliche Weise ausgebildet sein. Gemäß einer vorteilhaften Ausgestaltung ist es denkbar, dass die ersten schrägen Abschnitte aus einer durch die geraden Abschnitte gebildeten fiktiven Mantelfläche radial hervortreten und die zweiten schrägen Abschnitte gegenüber dieser Mantelfläche radial zurücktreten, wobei die ersten schrägen Abschnitte der einen Walze in die zweiten schrägen Abschnitte der anderen Walze jeweils unter Bildung des Scherspalts eintreten. Durch diese Ausbildung und Anordnung der schrägen Abschnitte ergibt sich zwischen den Walzen somit ein kammartiges Eingreifen der Walzenoberflächen ineinander, wobei jeder Eingriff eines ersten schrägen Abschnitts in einen zweiten schrägen Abschnitt zur Bildung zweier Zerkleinerungsbereiche beiträgt. Zum einen wird umfangsseitig ein Zerkleinerungsspalt zum reibenden und/oder reißenden Zerkleinern von Erntegut gebildet, zum anderen wird stirnseitig ein Scherspalt zum Schneiden des Ernteguts gebildet.

Aus fertigungstechnischer Sicht können die Walzen unterschiedlich hergestellt sein. Eine kostengünstige Herstellung kann erreicht werden, wenn die Walzen segmentiert aufgebaut sind, indem die geraden und schrägen Abschnitte einer Walze an zwei Arten von Ringkörpern ausgebildet sind, die in sich wiederholender Abfolge auf einen zylindrischen Grundkörper axial aufgebracht sind. Eine geeignete Sicherung der Ringkörper auf dem Grundkörper, beispielsweise mittels Passfeder und/oder eine axiale Einspannung, ist dabei zweckmäßig. Der segmentierte Walzenaufbau ermöglicht den einfachen, auch nachträglichen Austausch einzelner Elemente, z.B. bei Verschleiß.

Weiterhin wird durch Nutzung vieler Gleich- und/oder Ähnlichteile eine kostengünstige Herstellbarkeit erreicht. Die Ringkörper der einen Walze können dabei anders gestaltet sein als die Ringkörper der anderen Walze, um bestimmte Zerkleinerungswirkungen zu erzielen. Zur besonders kostengünstigen Herstellung können die Ringkörper beider Walzen jeweils identisch sein.

Zur Erzielung eines besonders geringen Gesamtgewichts der Vorrichtung kann der Grundkörper, auf den die Ringkörper aufgeschoben sind, als Hohlkörper gefertigt sein. Weiterhin bietet es sich an, die ersten schrägen Abschnitte jeweils an einem Ringkörper in Form einer im Wesentlichen kegelstumpfförmigen Schneidscheibe auszubilden.

Besonders vorteilhaft lässt sich die Erfindung fertigungstechnisch umsetzen, wenn die geraden Abschnitte und die zweiten schrägen Abschnitte an einer Ringscheibe ausgebildet sind, die axial gegliedert ist in jeweils zwei gerade Abschnitte und einen dazwischen liegenden durch eine Nut mit schräg verlaufendem Grund gebildeten zweiten schrägen Abschnitt. Durch diese Maßnahme können jeweils zwei gerade Abschnitte und ein dazwischen liegender zweiter schräger Abschnitt durch nur ein zu fertigendes Bauteil bereitgestellt werden. Insgesamt lässt sich die gesamte Oberfläche einer Walze dann durch nur zwei abwechselnd auf den Grundkörper aufzubringende unterschiedliche Bauteile (Schneidscheibe und Ringscheibe) bilden.

Es ist zweckmäßig, dass die Umfangsflächen der geraden Abschnitte eine Profilierung, insbesondere ein Zahnprofil aufweisen, um eine geeignete Zerkleinerungswirkung auf das Erntegut auszuüben.

Entsprechend kann es vorteilhaft sein, dass die Umfangsflächen der ersten schrägen Abschnitte und/oder die Umfangsflächen der zweiten schrägen Abschnitte zumindest bereichsweise eine Profilierung, insbesondere eine Verzahnung, Rändelung, Spiralnut oder dergleichen, oder eine Kombination von Profilierungen aufweisen.

Sind sowohl an den ersten schrägen Abschnitten als auch an den geraden Abschnitten einer Walze Verzahnungen vorgesehen, so ist es vorteilhaft, dass die Umfangsflächen der ersten schrägen Abschnitte eine Verzahnung aufweisen, die gröber ausfällt als eine an den Umfangsflächen der geraden Abschnitte ausgebildete Verzahnung. Durch diese Maßnahme wird das Erntegut von den herausstehenden ersten schrägen Abschnitten mit der Grobverzahnung leichter angenommen, während durch die feinere Verzahnung im geraden Abschnitt ein zuverlässigeres Aufschließen von Körnern im Erntegut erreicht wird.

Bezüglich der jeweils zwischen den geraden und schrägen Abschnitten unterschiedlicher Walzen gebildeten Zerkleinerungsspalte ist es im Hinblick auf eine zuverlässige Aufbereitungsqualität des Ernteguts zweckmäßig, dass diese Spalte kleiner sind als im Erntegut enthaltene Körner.

Die Erfindung bezieht sich auch auf eine landwirtschaftliche Erntemaschine zur Bearbeitung und Förderung von Erntegut, insbesondere auf einen selbstfahrenden Feldhäcksler, mit einer einem Gutbearbeitungsaggregat nachgelagerten Nachzerkleinerungsvorrichtung wie zuvor beschrieben.

Die Erfindung wird nachfolgend anhand eines in den Figuren 1 bis 3b gezeigten bevorzugten Ausführungsbeispiels näher erläutert. Dabei werden auch weitere vorteilhafte Wirkungen und Effekte beschrieben. In den Figuren zeigen:
- Fig. 1: einen selbstfahrenden Feldhäcksler in schematischer Seitenansicht,
- Fig. 2: eine erfindungsgemäße Nachzerkleinerungsvorrichtung im Schnitt von oben,
- Fig. 3a: eine Detailansicht der Vorrichtung gemäß dem in Fig. 2 angezeigten Ausschnitt B, welche insbesondere zur Erläuterung des Eingriffs der Wal-zen dient,
- Fig. 3b: die gleiche Detailansicht wie in Fig. 3a, wobei jedoch weitere Einzelheiten hervorgehoben sind.

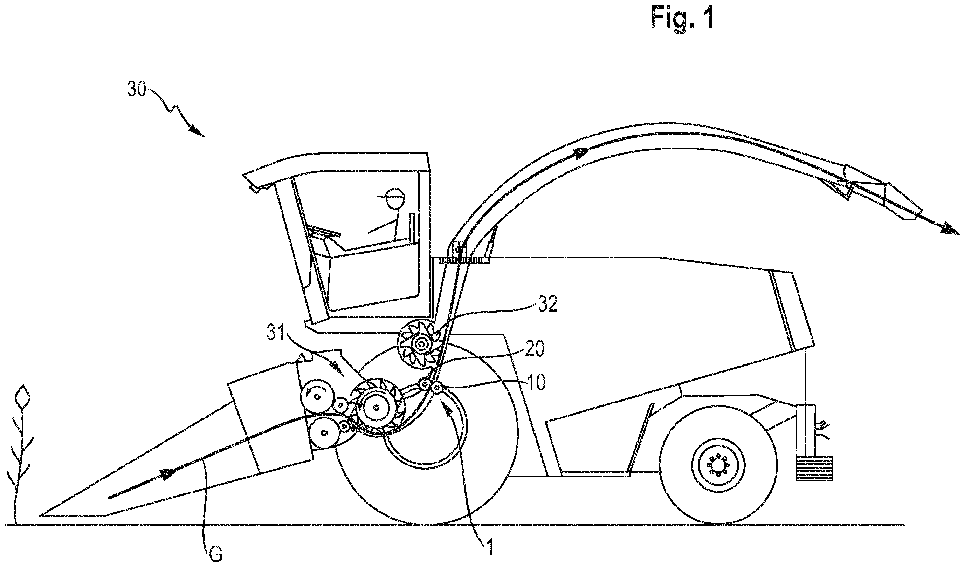

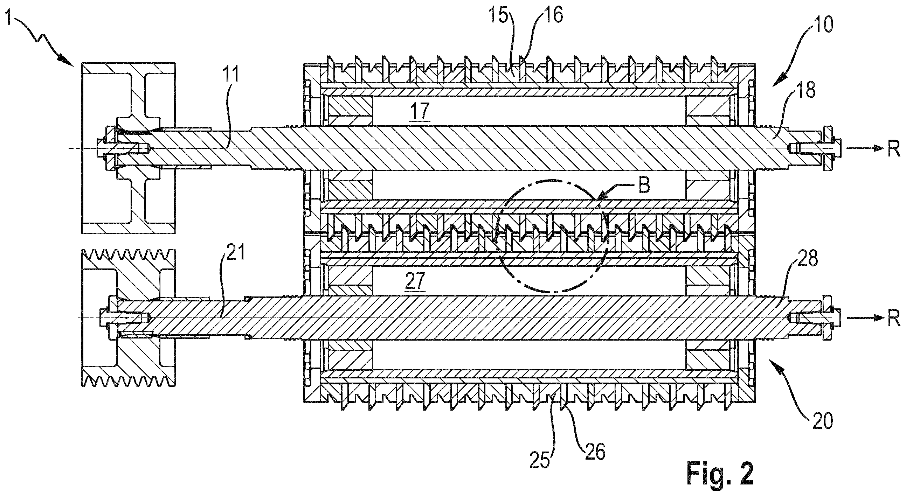

In Fig. 1 ist beispielhaft eine landwirtschaftliche Erntemaschine in Form eines selbstfahrenden Feldhäckslers 30 in schematischer Seitenansicht dargestellt. Der Feldhäcksler 30 ist auf für sich bekannte Weise (daher nicht näher bezeichnet) mit Vorder- und Hinterrädern sowie einem (unter anderem) diese antreibenden Hauptantriebsmotor ausgestattet, um zur Ernte von Pflanzenbestand über ein Feld zu fahren. Mittels eines frontseitig angebauten Erntevorsatzes wird der Pflanzenbestand in die Maschine aufgenommen, um anschließend in Form eines Stroms von Erntegut G (angedeutet durch eine durchgehende mit Pfeilen versehene Linie durch den Feldhäcksler 1) von verschiedenen Förder- und/oder Verarbeitungsaggregaten durch die Maschine 1 gefördert und dabei bearbeitet, insbesondere zerkleinert zu werden. Dabei nehmen paarweise angeordnete, rotierende Einzugswalzen eine Vorpressung des Ernteguts G vor, damit das Erntegut G beim Durchlaufen eines nachgelagerten Häckselaggregats 31 unter Zusammenwirkung einer rotierenden, mit Messern besetzten Häckseltrommel und einer Gegenschneide in kleine Partikel gehäckselt wird. Durch einen hinter der Häckseltrommel aufsteigenden Förderschacht gelangt das so gehäckselte Erntegut G in den Wirkungsbereich einer Nachzerkleinerungsvorrichtung 1. Diese umfasst im Wesentlichen zwei gegenläufig rotierend angetriebene, gegeneinander vorgespannte Walzen 10, 20 mit zueinander parallelen Rotationsachsen. Dabei wird Erntegut G, das einen zwischen den Walzen 10, 20 gebildeten Durchgang (der Drehsinn jeder Walze begünstigt dabei die Gutstromrichtung) passiert, unter dem mechanischen Einfluss der Walzenoberflächen auf anhand der Fig. 2 bis 3b noch näher zu erläuternde Weise aufbereitet. Diese weitere Aufbereitung dient insbesondere bei der Ernte von Mais dem Zweck, im gehäckselten Erntegut G vorhandene Maiskörner aufzuschließen, wodurch sich die Verdaulichkeit des späteren Futters für Tiere oder die Verwendbarkeit des Ernteguts für die Biogaserzeugung verbessert.

Nach Passieren der Nachzerkleinerungsvorrichtung 1 gelangt das Erntegut G schließlich in den Wirkungsbereich eines Auswurfbeschleunigers 32, welcher das Erntegut G vor dem Eintritt in einen Auswurfkrümmer nochmals beschleunigt, um eine sichere Förderung durch den Auswurfkrümmer und anschließend einen sicheren Auswurf zum Zweck der Überladung auf z.B. ein Transportfahrzeug zu gewährleisten.

In den Fig. 2 bis 3b wird ein bevorzugtes Ausführungsbeispiel einer Nachzerkleinerungsvorrichtung 1 beschrieben, welche vorteilhaft in den Feldhäcksler 30 gemäß Fig. 1 eingebaut ist.

Demnach zeigt Fig. 2 eine erfindungsgemäße Nachzerkleinerungsvorrichtung 1 in Schnittansicht von oben. Im Wesentlichen umfasst die Nachzerkleinerungsvorrichtung 1 zwei Walzen 10, 20 mit zueinander parallelen Rotationsachsen 11, 21. Die Walzen 10, 20 sind jeweils auf einer Welle 18, 28 befestigt, welche an beiden axialen Enden der Walzen 10, 20 aus deren Walzenkörper heraustritt. Mittels der Wellen 18, 28 lassen sich die Walzen 10, 20 jeweils drehbar gegenüber einem (aus Übersichtsgründen nicht gezeigten) gemeinsamen Gehäuse der Nachzerkleinerungsvorrichtung 1 lagern.

Zum Antrieb der Walzen 10, 20 ist an jeweils einem langen Ende der Welle 18 bzw. der Welle 28 eine (nicht näher bezeichnete) Riemenscheibe angebracht. Durch entsprechende Umschlingung der Riemenscheiben von einem Antriebsriemen lassen sich die Walzen 10, 20 in gegenläufige Drehung versetzen, wobei die Richtung der Umfangsgeschwindigkeiten der Walzen 10, 20 im Eingriffsbereich der Walzen der Förderrichtung des Ernteguts G (vgl. Fig. 1) entspricht.

Aus der Ansicht gemäß Fig. 2 geht hervor, dass die Walzen 10, 20 segmentiert aufgebaut sind. Insbesondere wird die Mantelfläche jeder Walze 10, 20 aus einer Vielzahl von Ringkörpern 15, 16, 25, 26 gebildet, die in sich wiederholender Abfolge auf einen zylindrischen Grundkörper 17, 27 axial aufgebracht sind. Der Grundkörper 17, 27 ist als Hohlkörper gefertigt, wodurch sich bei hinreichender Festigkeit ein verhältnismäßig geringes Gesamtgewicht jeder Walze 10, 20 ergibt. Alternativ könnte auch ein massiver Grundkörper vorgesehen sein.

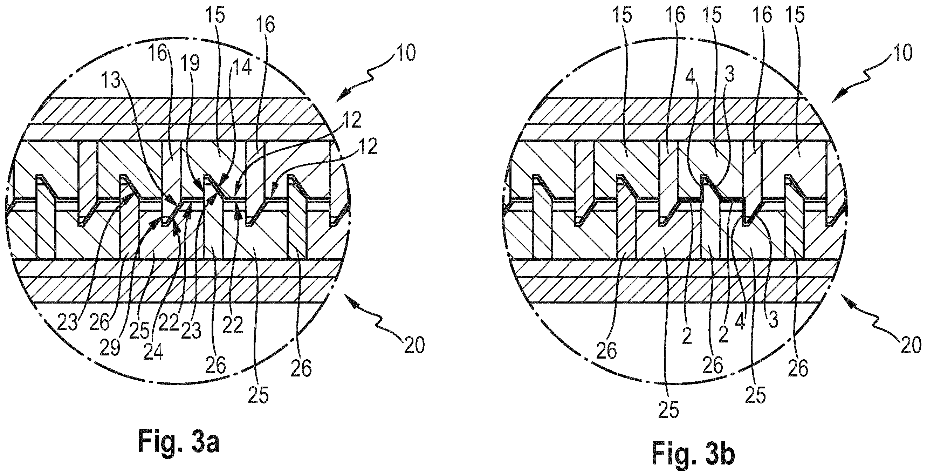

Auf der Walze 10 wechseln sich die Ringkörper 15, 16 in axialer Richtung R ab, während sich auf der Walze 20 die Ringkörper 25, 26 in axialer Richtung R abwechseln. Dabei sind die gleichartigen Ringkörper 16, 26 jeweils in Form einer im Wesentlichen kegelstumpfförmigen Schneidscheibe ausgebildet, die einen größeren Außendurchmesser aufweisen als jeweils die axial dazwischen liegenden Ringkörper 15, 25. Die Schneidscheiben 16, 26 weisen aufgrund der Kegelstumpfform eine gegenüber der jeweiligen Rotationsachse 11, 21 der zugehörigen Walze 10, 20 schräg verlaufende Umfangsfläche auf. Im radialen Außenbereich ist jede der Schneidscheiben 16, 26 mit einer Verzahnung versehen (siehe Fig. 3a, 3b).

Die gleichartigen Ringkörper 15, 25 der Walzen 10, 20 weisen dagegen eine im Wesentlichen kreiszylindrische äußere Grundform auf. In die ansonsten parallel zur Rotationsachse 11, 21 verlaufende Umfangsfläche ist jeweils in einem axial mittigen Bereich jedes Ringkörpers 15, 25 eine Umfangsnut mit zur Rotationsachse 11, 21 schrägem Nutgrund eingearbeitet, so dass sich im Bereich des schrägen Nutgrundes eine zur Rotationsachse 11, 21 schräge Umfangsfläche ergibt.

Wie in Fig. 2 zu sehen, sind die Ringkörper 15, 16, 25, 26 jeweils derart axial zueinander versetzt und abwechselnd auf den Walzen 10, 20 angeordnet, dass Außenbereiche der Schneidscheiben 16, 26 jeweils in eine Umfangsnut eines Ringkörpers 25, 15 der gegenüberliegenden Walze 20, 10 eintreten.

Anhand der Detailansichten der Fig. 3a und 3b, welche jeweils den vergrößerten Ausschnitt B aus Fig. 2 zeigen, wird die Ausgestaltung der Walzen 10, 20 noch näher erläutert.

Demnach weist aufgrund der gezeigten Gestaltung jede der Walzen in axialer Richtung abwechselnd gerade Abschnitte 12, 22 mit einer zur Rotationsachse 11, 21 der Walze 10, 20 parallel verlaufenden Umfangsfläche und schräge Abschnitte 13, 14, 23, 24 mit einer zur Rotationsachse 11, 21 der Walze 10, 20 schräg verlaufenden Umfangsfläche auf. Dabei ist einem geraden Abschnitt 12, 22 der einen Walze 10, 20 jeweils ein gerader Abschnitt 22, 12 der anderen Walze 20, 10 zugeordnet, derart dass deren sich gegenüberliegenden Umfangsflächen zueinander einen parallel zur Rotationsachse 11, 21 verlaufenden Zerkleinerungsspalt 2 für das Erntegut G bilden. Weiterhin ist einem schrägen Abschnitt 13, 14, 23, 24 der einen Walze 10, 20 jeweils ein schräger Abschnitt 23, 24, 13, 14 der anderen Walze 20, 10 zugeordnet, derart dass deren sich gegenüberliegenden Umfangsflächen zueinander einen schräg zur Rotationsachse 11, 21 verlaufenden Zerkleinerungsspalt 3 für das Erntegut G bilden.

Die geraden Abschnitte 12, 22 und schrägen Abschnitte 13, 14, 23, 24 bilden somit zwei Arten von Zerkleinerungsspalten 2 und 3, die zur Veranschaulichung in Fig. 3b eingezeichnet sind. Ein sich in axialer Richtung R auf jeder der Walzen 10, 20 wiederholendes Segment, umfassend eine Ringscheibe 15 und eine Schneidscheibe 16 (bzw. eine Ringscheibe 25 und eine Schneidscheibe 26), weist dabei jeweils zwei parallel zur Rotationsachse verlaufende Zerkleinerungsspalte 2 und zwei schräg zur Rotationsachse verlaufende Zerkleinerungsspalte 3 für Erntegut G auf. Aufgrund des teilweise schrägen Verlaufs des Zerkleinerungsspalts weist die Nachzerkleinerungsvorrichtung 1 damit eine erhöhte Zerkleinerungswirkung auf. Die gebildeten Zerkleinerungsspalte 2 und 3 sind derart bemessen, dass diese kleiner als im Erntegut enthaltene Maiskörner sind, um so ein sicheres Aufschließen der Körner zu erreichen.

Wie Fig. 3a zeigt, grenzt weiterhin an jeden geraden Abschnitt 12, 22 einer Walze 10, 20 eine sich in radialer Ebene erstreckende Stirnfläche 19, 29 an, wobei einer so gebildeten Stirnfläche 19, 29 der einen Walze 10, 20 jeweils eine Stirnfläche 29, 19 der anderen Walze 20, 10 zugeordnet ist, um mit dieser einen in radialer Ebene verlaufenden Scherspalt 4 für das Erntegut G zu bilden. Die Nachzerkleinerungsvorrichtung 1 weist somit zusätzlich zu den Zerkleinerungsspalten 2, 3 noch zusätzliche Scherspalte 4 auf, die in Fig. 3b eingezeichnet sind. Durch diese Scherspalte 4 wird eintretendes Erntegut G in diesen Bereichen auf besonders kraft- und energiesparende Weise geschnitten. Insbesondere werden durch diese Maßnahme im Erntegut enthaltene Bestandteile mit Überlänge (z.B. Lieschblätter) sicher erfasst und zerkleinert. Die sichere Erfassung und Gutmitnahme in den Scherspalt 4 wird dabei durch die äußere Verzahnung der ersten schrägen Abschnitte 13, 23 begünstigt.

In bevorzugter Weise sind, wie in Fig. 3a zu sehen, einander zugeordnete schräge Abschnitte 14, 23 bzw. 13, 24 komplementär zueinander ausgebildet. Das heißt dass sich eine Paarung aus beispielsweise einem schrägen Abschnitt 14 der Walze 10 und einem gegenüberliegenden schrägen Abschnitt 23 der Walze 20 derart zueinander ergänzen, dass deren Umfangsflächen im Eingriffsbereich (wie in Fig. 3a dargestellt) zwar schräg zur Rotationsachse 11, 21, jedoch parallel zueinander verlaufen.

Dieses wird vorteilhaft dadurch erreicht, dass die schrägen Abschnitte 13, 14, 23, 24 jeder Walze 10, 20 erste schräge Abschnitte 13, 23 und zweite schräge Abschnitte 23, 24 umfassen, die sich zumindest darin unterscheiden, dass deren Umfangsflächen bezogen auf die Richtung R der jeweiligen Rotationsachse 11, 21 zueinander entgegengesetzte Schrägungen aufweisen. Gemäß dem bevorzugten Ausführungsbeispiel wechseln sich dabei auf jeder der Walzen 10, 20 die ersten schrägen Abschnitte 13, 23 und die zweiten schrägen Abschnitte 14, 24 in axialer Richtung R ab. Es ergibt sich damit der vorteilhafte Effekt, dass im Zerkleinerungsbetrieb an den schrägen Abschnitten entstehende Axialkräfte an jeder Walze weitestgehend oder sogar vollständig in sich aufgehoben werden.

Zur Erzielung einer hohen Zerkleinerungswirkung sind gemäß Darstellung der Fig. 3a die Umfangsflächen der geraden Abschnitte 12, 22 mit einer Profilierung in Form eines Zahnprofils versehen. Dieses Zahnprofil ist vorteilhaft fein genug, dass sich im Erntegut G enthaltene Maiskörner nicht in die Zahnlücken setzen können. Auf für sich bekannte Weise kann vorgesehen sein, dass die geraden Abschnitte 12 der Walze 10 eine andere Verzahnung, insbesondere eine abweichende Zahnanzahl, als die geraden Abschnitte 22 der anderen Walze 20 aufweisen.

Weiterhin sind im gezeigten Ausführungsbeispiel die Umfangsflächen der ersten schrägen Abschnitte 13, 23 im Außenbereich mit einer Verzahnung versehen. Diese Verzahnung fällt vorzugsweise gröber aus als die an den Umfangsflächen der geraden Abschnitte 12, 22 der jeweils gleichen Walze 10, 20 ausgebildete Verzahnung. Es ergibt sich dadurch der Vorteil, dass die Scheiben 16, 26 das Erntegut leichter annehmen und fördern, während im Bereich der geraden Abschnitte 12, 22 ein sicheres Aufschließen von im Erntegut enthaltenen Maiskörnern gewährleistet ist.

Zusätzlich oder alternativ kann vorgesehen sein, dass die Umfangsflächen der zweiten schrägen Abschnitte 14, 24 zumindest bereichsweise eine Profilierung, insbesondere eine Verzahnung, Rändelung, Spiralnut oder dergleichen aufweisen.

Die Nachzerkleinerungsvorrichtung gemäß dem beschriebenen Ausführungsbeispiel weist verschiedene Vorteile auf. Zunächst stellt die Vorrichtung an zwei Walzen drei Arten von Spalten bereit, an denen das eintretende Erntegut zerkleinert wird. Dabei findet ein Reiben und/oder Aufschließen (auch "Cracken") des Ernteguts insbesondere an den teils parallel, teils schräg zur Rotationsachse verlaufenden Zerkleinerungsspalten 2 bzw. 3 statt. Da die dabei insgesamt zur Verfügung stehende Oberfläche aufgrund des teilweise schrägen Spaltverlaufs vergrößert ist, lassen sich hohe Durchsätze erzielen. Durch die Kombination mit den daneben bereitgestellten Scherspalten werden weiterhin längere Bestandteile (Lieschblätter) im Erntegut auf energiesparende Weise gekürzt. Dadurch ergibt sich eine erhöhte Verarbeitungsqualität des Ernteguts. Aufgrund der aus der Mantelfläche herausragenden Schneidscheiben, die im Außenbereich verzahnt sind, weist die Vorrichtung eine besonders effektive Gutannahme auf, wodurch die benötigte Antriebsleistung trotz hoher Erntegutdurchsatzleistung verhältnismäßig gering ausfällt.

Fertigungstechnisch lässt sich die Nachzerkleinerungsvorrichtung vorteilhaft herstellen, wobei sich durch die mögliche Verwendung von Gleich- und/oder Ähnlichteilen die Kosten in Grenzen halten lassen. Insbesondere sei darauf hingewiesen, dass die Walzen - abgesehen von einem axialen Versatz der Ringkörper um ein halbes Segment - identisch aufgebaut sind. Die Herstellung unterscheidet sich daher nur geringfügig.

Abschließend sei angemerkt, dass weitere Ausgestaltungsmöglichkeiten für die Erfindung denkbar sind. Beispielsweise könnte die Vorrichtung auch ein oder mehrere weitere Walzenpaare umfassen, die beispielsweise in Gutstromrichtung nacheinander oder von Teilströmen parallel durchlaufen werden.

Hinsichtlich des Antriebs der Walzen sei angemerkt, dass diese vorzugsweise mit einer gegenläufigen, im Betrag jedoch geringfügig unterschiedlichen Umdrehungsgeschwindigkeit angetrieben werden. Dadurch erhöht sich aufgrund zusätzlicher Reibwirkung - auf für sich bereits bekannte Weise - der Zerkleinerungseffekt auf das Erntegut nochmals. Besonders vorteilhaft ist die Geschwindigkeitsdifferenz variabel einstellbar, so dass eine Anpassung an die jeweiligen Erntebedingen möglich ist.

### Bezugszeichenliste

- 1: Nachzerkleinerungsvorrichtung
- 2: Zerkleinerungsspalt
- 3: Zerkleinerungsspalt
- 4: Scherspalt
- 10: Walze
- 11: Rotationsachse
- 12: gerader Abschnitt
- 13: erster schräger Abschnitt
- 14: zweiter schräger Abschnitt
- 15: Ringscheibe
- 16: Schneidscheibe
- 17: Grundkörper
- 18: Welle
- 19: Stirnfläche
- 20: Walze
- 21: Rotationsachse
- 22: gerade Abschnitt
- 23: erster schräger Abschnitt
- 24: zweiter schräger Abschnitt
- 25: Ringscheibe
- 26: Schneidscheibe
- 27: Grundkörper
- 28: Welle
- 29: Stirnfläche
- 30: Feldhäcksler
- 31: Häckselaggregat
- 32: Auswurfbeschleuniger

- G: Erntegut
- R: Richtung

## Patentansprüche

1. Nachzerkleinerungsvorrichtung (1) für gehäckseltes Erntegut (G) mit zumindest zwei Walzen (10, 20) mit zueinander parallel verlaufenden Rotationsachsen (11, 21), wobei jede der Walzen (10, 20) in axialer Richtung (R) abwechselnd gerade Abschnitte (12, 22) mit einer zur Rotationsachse (11, 21) der Walze (10, 20) parallel verlaufenden Umfangsfläche und schräge Abschnitte (13, 14, 23, 24) mit einer zur Rotationsachse (11, 21) der Walze (10, 20) schräg verlaufenden Umfangsfläche aufweist, und wobei einem geraden Abschnitt (12, 22) der einen Walze (10, 20) jeweils ein gerader Abschnitt (22, 12) der anderen Walze (20, 10) zugeordnet ist, derart dass deren sich gegenüberliegenden Umfangsflächen zueinander einen parallel zur Rotationsachse (11, 21) verlaufenden Zerkleinerungsspalt (2) für das Erntegut (G) bilden, und wobei einem schrägen Abschnitt (13, 14, 23, 24) der einen Walze (10, 20) jeweils ein schräger Abschnitt (23, 24, 13, 14) der anderen Walze (20, 10) zugeordnet ist, derart dass deren sich gegenüberliegenden Umfangsflächen zueinander einen schräg zur Rotationsachse (11, 21) verlaufenden Zerkleinerungsspalt (3) für das Erntegut (G) bilden, **dadurch gekennzeichnet, dass** an jeden geraden Abschnitt (12, 22) einer Walze (10, 20) eine sich in radialer Ebene erstreckende Stirnfläche (19, 29) angrenzt, wobei einer so gebildeten Stirnfläche (19, 29) der einen Walze (10, 20) jeweils eine Stirnfläche (29, 19) der anderen Walze (20, 10) zugeordnet ist, um mit dieser einen in radialer Ebene verlaufenden Scherspalt (4) für das Erntegut (G) zu bilden.

2. Nachzerkleinerungsvorrichtung nach Anspruch 1, **dadurch gekennzeichnet, dass** einander zugeordnete schräge Abschnitte (14, 23; 13, 24) komplementär zueinander ausgebildet sind.

3. Nachzerkleinerungsvorrichtung nach einem der vorigen Ansprüche, **dadurch gekennzeichnet, dass** die schrägen Abschnitte (13, 14, 23, 24) jeder Walze (10, 20) erste schräge Abschnitte (13, 23) und zweite schräge Abschnitte (23, 24) umfassen, die sich zumindest darin unterscheiden, dass deren Umfangsflächen bezogen auf eine Richtung (R) der Rotationsachse (11, 21) zueinander entgegengesetzte Schrägungen aufweisen.

4. Nachzerkleinerungsvorrichtung nach Anspruch 3, **dadurch gekennzeichnet, dass** sich auf jeder der Walzen (10, 20) erste schräge Abschnitte (13, 23) und zweite schräge Abschnitte (14, 24) in axialer Richtung (R) abwechseln.

5. Nachzerkleinerungsvorrichtung nach Anspruch 3 oder 4, **dadurch gekennzeichnet, dass** die ersten schrägen Abschnitte (13, 23) aus einer durch die geraden Abschnitte (12, 22) gebildeten fiktiven Mantelfläche radial hervortreten und die zweiten schrägen Abschnitte (14, 24) gegenüber dieser Mantelfläche radial zurücktreten, wobei die ersten schrägen Abschnitte (13, 23) der einen Walze (10, 20) in die zweiten schrägen Abschnitte (24, 14) der anderen Walze (20, 10) jeweils unter Bildung des Scherspalts (4) eintreten.

6. Nachzerkleinerungsvorrichtung nach einem der vorigen Ansprüche, **dadurch gekennzeichnet, dass** die Walzen (10, 20) segmentiert aufgebaut sind, indem die geraden und schrägen Abschnitte (12, 13, 14, 22, 23, 24) einer Walze (10, 20) an zwei Arten von Ringkörpern (15, 16, 25, 26) ausgebildet sind, die in sich wiederholender Abfolge auf einen zylindrischen Grundkörper (17, 27) axial aufgebracht sind.

7. Nachzerkleinerungsvorrichtung nach Anspruch 6, **dadurch gekennzeichnet, dass** der Grundkörper (17, 27) als Hohlkörper gefertigt ist.

8. Nachzerkleinerungsvorrichtung nach Anspruch 6 oder 7, **dadurch gekennzeichnet, dass** die ersten schrägen Abschnitte (13, 23) jeweils an einem Ringkörper in Form einer im Wesentlichen kegelstumpfförmigen Schneidscheibe (16, 26) ausgebildet sind.

9. Nachzerkleinerungsvorrichtung nach einem der Ansprüche 6 bis 8, **dadurch gekennzeichnet, dass** die geraden Abschnitte (12, 22) und die zweiten schrägen Abschnitte (14, 24) an einer Ringscheibe (15, 25) ausgebildet sind, die axial gegliedert ist in jeweils zwei gerade Abschnitte (12, 22) und einen dazwischen liegenden durch eine Nut mit schräg verlaufendem Grund gebildeten zweiten schrägen Abschnitt (14, 24).

10. Nachzerkleinerungsvorrichtung nach einem der vorigen Ansprüche, **dadurch gekennzeichnet, dass** die Umfangsflächen der geraden Abschnitte (12, 22) eine Profilierung, insbesondere ein Zahnprofil aufweisen.

11. Nachzerkleinerungsvorrichtung nach einem der vorigen Ansprüche, **dadurch gekennzeichnet, dass** die Umfangsflächen der ersten schrägen Abschnitte (13, 23) und/oder die Umfangsflächen der zweiten schrägen Abschnitte (14, 24) zumindest bereichsweise eine Profilierung, insbesondere eine Verzahnung, Rändelung, Spiralnut oder dergleichen, oder eine Kombination von Profilierungen aufweisen.

12. Nachzerkleinerungsvorrichtung nach einem der Ansprüche 3 bis 11, **dadurch gekennzeichnet, dass** an einer Walze (10, 20) die Umfangsflächen der ersten schrägen Abschnitte (13, 23) eine Verzahnung aufweisen, die gröber ausfällt als eine an den Umfangsflächen der geraden Abschnitte (12, 22) der gleichen Walze (10, 20) ausgebildete Verzahnung.

13. Landwirtschaftliche Erntemaschine zur Bearbeitung und Förderung von Erntegut (G), insbesondere selbstfahrender Feldhäcksler (30), mit einer einem Gutbearbeitungsaggregat (31) nachgelagerten Nachzerkleinerungsvorrichtung (1) nach einem der vorigen Ansprüche.

## Claims

1. A post-shredding apparatus (1) for chopped crop material (G) having at least two rollers (10, 20) with mutually parallel axes of rotation (11, 21), wherein each of the rollers (10, 20) has alternately straight portions (12, 22) in the axial direction (R) with a peripheral surface extending parallel to the axis of rotation (11, 21) of the roller (10, 20) and inclined portions (13, 14, 23, 24) with a peripheral surface extending inclinedly to the axis of rotation (11, 21) of the roller (10, 20), wherein associated with a straight portion (12, 22) of the one roller (10, 20) is a respective straight portion (22, 12) of the other roller (20, 10) in such a way that their mutually opposite peripheral surfaces form relative to each other a shredding gap (2) for the crop material (G), that extends parallel to the axis of rotation (11, 21), and wherein associated with an inclined portion (13, 14, 23, 24) of the one roller (10, 20) is a respective inclined portion (23, 24, 13, 14) of the other roller (20, 10) in such a way that their mutually opposite peripheral surfaces form relative to each other a shredding gap (3) for the crop material (G), that extends inclinedly relative to the axis of rotation (11, 21), **characterised in that** adjacent to each straight portion (12, 22) of a roller (10, 20) is an end face (19, 29) extending in the radial plane, wherein associated with an end face (19, 29) formed **in that** way of the one roller (10, 20) is a respective end face (29, 19) of the other roll (20, 10) in order to form therewith a shearing gap (4) extending in the radial plane for the crop material (G).

2. A post-shredding apparatus according to claim 1 **characterised in that** mutually associated inclined portions (14, 23; 13, 24) are complementary to one another.

3. A post-shredding apparatus according to one of the preceding claims **characterised in that** the inclined portions (13, 14, 23, 24) of each roller (10, 20) comprise first inclined portions (13, 23) and second inclined portions (23, 24) which differ at least **in that** the peripheral surfaces thereof have mutually opposite inclinations relative to a direction (R) of the axis of rotation (11, 21).

4. A post-shredding apparatus according to claim 3 **characterised in that** first inclined portions (13, 23) and second inclined portions (14, 24) alternate on each of the rollers (10, 20) in the axial direction (R).

5. A post-shredding apparatus according to claim 3 or claim 4 **characterised in that** the first inclined portions (13, 23) project radially from a fictitious peripheral surface formed by the straight portions (12, 22) and the second inclined portions (14, 24) are set back radially relative to said peripheral surface, wherein the first inclined portions (13, 23) of the one roller (10, 20) pass into the second inclined portions (24, 14) of the other roller (20, 10) respectively to form the shear gap (4).

6. A post-shredding apparatus according to one of the preceding claims **characterised in that** the rollers (10, 20) are of a segmented structure **in that** the straight and inclined portions (12, 13, 14, 22, 23, 24) of a roller (10, 20) are provided on two kinds of annular bodies (15, 16, 25, 26) which are fitted axially in a repetitive sequence on a cylindrical base body (17, 27).

7. A post-shredding apparatus according to claim 6 **characterised in that** the base body (17, 27) is in the form of a hollow body.

8. A post-shredding apparatus according to claim 6 or claim 7 **characterised in that** the first inclined portions (13, 23) are respectively provided on an annular body in the form of a substantially frusto-conical cutting disc (16, 26).

9. A post-shredding apparatus according to one of claims 6 to 8 **characterised in that** the straight portions (12, 22) and the second inclined portions (14, 24) are provided on an annular disc (15, 25) which is axially divided into two respective straight portions (12, 22) and an interposed second inclined portion (14, 24) formed by a groove having an inclinedly extending bottom.

10. A post-shredding apparatus according to one of the preceding claims **characterised in that** the peripheral surfaces of the straight portions (12, 22) have a profiling, in particular a tooth profile.

11. A post-shredding apparatus according to one of the preceding claims **characterised in that** the peripheral surfaces of the first inclined portions (13, 23) and/or the peripheral surfaces of the second inclined portions (14, 24) have at least portion-wise a profiling, in particular a tooth arrangement, knurling, spiral groove or the like, or a combination of profilings.

12. A post-shredding apparatus according to one of claims 3 to 11 **characterised in that** the peripheral surfaces of the first inclined portions (13, 23) on a roller (10, 20) have a tooth arrangement which is coarser than a tooth arrangement on the peripheral surfaces of the straight portions (12, 22) of the same roller (10, 20).

13. An agricultural harvester for processing and transporting crop material (G), in particular a self-propelled forage harvester (30), with a post-shredding apparatus (1) according to one of the preceding claims arranged downstream of a crop material processing unit (31).

## Revendications

1. Dispositif de broyage secondaire (1) pour du produit de récolte haché (G), comprenant au moins deux rouleaux (10, 20) avec des axes de rotation s'étendant parallèlement l'un à l'autre (11, 21), chacun des rouleaux (10, 20) comportant, en alternance dans la direction axiale (R), des portions rectilignes (12, 22) avec une surface périphérique s'étendant parallèlement à l'axe de rotation (11, 21) du rouleau (10, 20) et des portions obliques (13, 14, 23, 24) avec une surface périphérique s'étendant en oblique par rapport à l'axe de rotation (11, 21) du rouleau (10, 20), et à une portion rectiligne (12, 22) de l'un des rouleaux (10, 20) étant respectivement associée une portion rectiligne (22, 12) de l'autre rouleau (20, 10), de façon que leurs surfaces périphériques opposées forment l'une par rapport à l'autre, pour le produit récolté (G), un interstice de broyage (2) s'étendant parallèlement à l'axe de rotation (11, 21), et à une portion oblique (13, 14, 23, 24) de l'un des rouleaux (10, 20) étant respectivement associée une portion oblique (23, 24, 13, 14) de l'autre rouleau (20, 10), de façon que leurs surfaces périphériques opposées forment l'une par rapport à l'autre, pour le produit de récolte (G), un interstice de broyage (3) s'étendant en oblique par rapport à l'axe de rotation (11, 21), **caractérisé en ce qu'**à chaque portion rectiligne (12, 22) d'un rouleau (10, 20) est adjacente une surface frontale (19, 29) s'étendant dans le plan radial, à une surface frontale (19, 29) ainsi formée d'un des rouleaux (10, 20) étant respectivement associée une surface frontale (29, 19) de l'autre rouleau (20, 10) afin de former avec celle-ci un interstice de cisaillement (4), s'étendant dans le plan radial, pour le produit de récolte (G).

2. Dispositif de broyage secondaire selon la revendication 1, **caractérisé en ce que** des portions obliques (14, 23 ; 13, 24) associées entre elles sont conformées de manière complémentaire entre elles.

3. Dispositif de broyage secondaire selon une des revendications précédentes, **caractérisé en ce que** les portions obliques (13, 14, 23, 24) de chaque rouleau (10, 20) incluent des premières portions obliques (13, 23) et des secondes portions obliques (23, 24) qui se différencient au moins **en ce que**, par rapport à une direction (R) de l'axe de rotation (11, 21), leurs surfaces périphériques présentent des inclinaisons opposées l'une à l'autre.

4. Dispositif de broyage secondaire selon la revendication 3, **caractérisé en ce que**, sur chacun des rouleaux (10, 20), des premières portions obliques (13, 23) et des secondes portions obliques (14, 24) alternent dans la direction axiale (R).

5. Dispositif de broyage secondaire selon la revendication 3 ou 4, **caractérisé en ce que** les premières portions obliques (13, 23) dépassent radialement d'une surface latérale fictive formée par les portions rectilignes (12, 22), et les secondes portions obliques (14, 24) sont en retrait radial par rapport à cette surface latérale, les premières portions obliques (13, 23) de l'un des rouleaux (10, 20) pénétrant dans les secondes portions obliques (24, 14) de l'autre rouleau (20, 10) en formant respectivement l'interstice de cisaillement (4).

6. Dispositif de broyage secondaire selon une des revendications précédentes, **caractérisé en ce que** les rouleaux (10, 20) ont une structure segmentée par le fait que les portions rectilignes et obliques (12, 13, 14, 22, 23, 24) d'un rouleau (10, 20) sont réalisées sur deux types de corps annulaires (15, 16, 25, 26) qui sont emmanchés axialement sur un corps de base cylindrique (17, 27) selon une succession répétitive.

7. Dispositif de broyage secondaire selon la revendication 6, **caractérisé en ce que** le corps de base (17, 27) est conformé en corps creux.

8. Dispositif de broyage secondaire selon la revendication 6 ou 7, **caractérisé en ce que** les premières portions obliques (13, 23) sont réalisées respectivement sur un corps annulaire en forme de disque de coupe (16, 26).

9. Dispositif de broyage secondaire selon une des revendications 6 à 8, **caractérisé en ce que** les portions rectilignes (12, 22) et les secondes portions obliques (14, 24) sont réalisées sur un disque annulaire (15, 25) qui est divisé axialement en respectivement deux portions rectilignes (12, 22) et, disposée entre elles, une seconde portion oblique (14, 24) formée par une gorge à fond s'étendant en oblique.

10. Dispositif de broyage secondaire selon une des revendications précédentes, **caractérisé en ce que** les surfaces périphériques des portions rectilignes (12, 22) présentent un profilage, en particulier un profil denté.

11. Dispositif de broyage secondaire selon une des revendications précédentes, **caractérisé en ce que** les surfaces périphériques des premières portions obliques (13, 23) et/ou les surfaces périphériques des secondes portions obliques (14, 24) présentent au moins par endroits un profilage, en particulier une denture, un moletage, une rainure hélicoïdale ou analogue, ou une combinaison de profilages.

12. Dispositif de broyage secondaire selon une des revendications 3 à 11, **caractérisé en ce que**, sur un rouleau (10, 20), les surfaces périphériques des premières portions obliques (13, 23) présentent une denture d'aspect plus grossier qu'une denture réalisée sur les surfaces périphériques des portions rectilignes (12, 22) du même rouleau (10, 20).

13. Machine agricole de récolte pour traiter et transporter du produit de récolte (G), en particulier ensileuse automotrice (30), comprenant un dispositif de broyage secondaire (1) selon une des revendications précédentes, disposé en aval d'un organe de traitement de produit (31).
